# EUROPEAN PATENT APPLICATION

(11) **EP 2 031 751 A2**
(43) Date of publication of application: **04.03.2009**
(21) Application number: 08163026.1
(22) Date of filing: 27.08.2008
(51) Int. Cl.: H02P 25/02

(54) **Pumping driver for linear motor with constant battery power/current**

(30) Priority: 28.08.2007 US 968321 P
(71) Applicant: Soreq Nuclear Research Center, 81800 Yavne (IL)
(72) Inventor: Maron, Vladimir, 81800, Yavne (IL)
(74) Representative: Lecomte, Didier

(57) **Abstract**

A pumping driver for a linear motor, which includes a DC/DC converter that performs the function of constant power pumping or constant input current pumping of a buttery to a linear motor.

## Description

### CROSS-REFERENCE TO RELATED APPLICATIONS

This application claims priority under 35 USC §119 to U.S. Provisional Patent Application, Serial No. 60/968,321, filed August 28, 2007, which is incorporated herein by reference.

### FIELD OF THE INVENTION

The present invention relates generally to a pumping driver for a linear motor, such as for linear Stirling cryogenic coolers.

### BACKGROUND OF THE INVENTION

Military, antiterrorist, and law enforcement activities demand development and manufacture of hand-held or miniaturized equipment for use in challenging environments. The main performance parameters of the battery-operated power-electronics unit of these devices is weight, operating time, environmental operating range, reliability, life-time, and cost.

Drivers are known for linear Stirling cryogenic coolers. Cryogenic coolers of this type are essential elements of high sensitivity, handheld or otherwise mobile infrared imagers, of the types that are used for surveillance, fire control, and smart-weapons guidance. These coolers reach a very low temperature (about 70K) and are stabilized to a high accuracy (about ±0.5K). These coolers have a power requirement of a few watts for heat loads of 0.2W. They operate in hand-held, pod-based or active-seeker mounted battery powered systems. Achieving small size and low input electrical power is essential. In all of these systems, there are sophisticated sensors connected to analog and digital electronics that are all extremely sensitive to interference and must also be connected to the common power source. Thus, electromagnetic compatibility is also a requirement of the cryogenic cooler power unit. Reduction of peak power and input current harmonics are important factors in reducing the electromagnetic interference and battery sizes.

A cryogenic cooler driven by a linear motor (LM), presents a mechanical oscillating system operating with a low self-oscillating frequency of 40-80Hz. Linear motor driver (LMD) tuning system to mechanical resonance operates with the same frequency. This LM operation principle defines pulsed periodical current from the primary source with double the frequency, relative to mechanical oscillations, which means 80-160Hz.

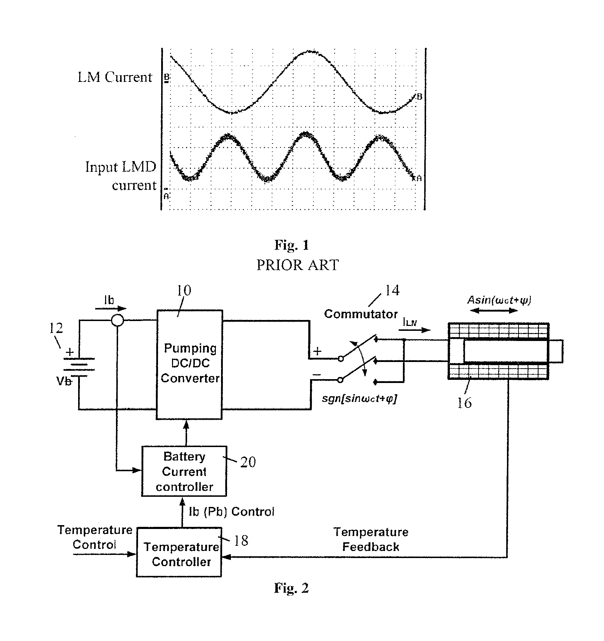

All of the linear motor drivers developed and produced by leading companies (Ricor, Thales, AIM) are based on the concept of sine-voltage wave generation for supplying LM. All of them have the same disadvantages, based on the same principle. An example is a sine LMD from Ricor Company. Input voltage of LMD is 24VDC of laboratory PS. Input LMD current is represented by beam A of the scope picture in Fig. 1. Beam B of Fig. 1 is the current of the LM. Current of the linear motor is represented by beam B. The input peak current (500mA) is much more than the average value (about 300mA), which determines the required power. It is noted that for battery power, for example, for pack building on the base of two Li-Ion cells (7.2V), peak current should be 1.7A and average I A.

The main disadvantages in this shape of current are:
High peak current (power) from input source (battery pack). High peak current increases size and weight of battery pack (primary source) and reduce battery pack capacity. Influence of these factors seriously redoubles at low temperatures operation.
High amplitude and low frequency of second harmonics (80-160Hz). To filter low frequency harmonics systems, a large filter is needed to fulfill MIL-STD-461 EMI requirements.
Increased current RMS. Higher battery current RMS causes extra power losses in the battery pack, limits system applications at high temperatures (typical maximum battery temperature 71 C) and shortens battery life time.

### SUMMARY OF THE INVENTION

The present invention seeks to provide a pumping driver for a linear motor, such as for linear Stirling cryogenic coolers, as is described in detail further hereinbelow.

There is provided in accordance with an embodiment of the present invention a pumping driver for a linear motor including a DC/DC converter connected to a battery, an output of the DC/DC converter being connected to a commutator, wherein the commutator is connected to a linear motor, and a temperature controller, wherein temperature feedback from the linear motor is fed to the temperature controller, and the temperature controller processes the feedback and a temperature control signal to output a control signal to a battery current controller that outputs to the DC/DC converter, such that the DC/DC converter that performs at least one of constant power pumping and constant input current pumping of the battery to the linear motor.

In accordance with an embodiment of the present invention the pumping driver changes power of the linear motor by regulation of at least one of power level and input current level to the linear motor.

In accordance with another embodiment of the present invention the commutator inverts output current of the DC/DC converter with a frequency corresponding to a mechanical resonance of the linear motor.

In accordance with another embodiment of the present invention the DC/DC converter includes a current source.

### BRIEF DESCRIPTION OF THE DRAWINGS

The present invention will be understood and appreciated more fully from the following detailed description taken in conjunction with the drawings in which:
Fig. 1 is a simplified illustration of input current of sine-voltage linear motor driver (beam A) and current of linear motor (beam B) in the prior art;
Fig. 2 is a simplified illustration of linear motor driver operation, in accordance with an embodiment of the present invention;
Fig. 3 is a simplified illustration of battery and linear motor current and voltage forms, in accordance with an embodiment of the present invention;
Fig. 4 is a simplified illustration of realization on the base of a current source, in accordance with an embodiment of the present invention; and
Fig. 5 is a simplified illustration of battery and linear motor current forms, in accordance with another embodiment of the present invention.

### DETAILED DESCRIPTION OF EMBODIMENTS

Reference is now made to Fig. 2, which illustrates linear motor driver operation, in accordance with an embodiment of the present invention.

A DC/DC converter 10 is connected to a battery 12. The output of the converter 10 is connected to a commutator 14, which in turn is connected to a linear motor (LM) 16. Temperature feedback from LM 16 is fed to a temperature controller 18. The temperature controller 18 processes the feedback and a temperature control signal to output a control signal to a battery current controller 20, which outputs to the converter 10.

Ideal current form of battery pack for supplying of LMD is constant current. Level of this current is defined by required power of LM for temperature control. Battery pack constant current or the same - constant power of battery pack is the best battery for: a) minimum sizes; b) maximum life time; c) maximum capacity; d) temperature mode.

The DC/DC converter 10 consumes constant power (CP) from the battery 12, or the same in this case, constant current (CC) by fulfilling input CP or CC mode controls of converter 10. The commutator 14 inverts the output current of converter 10 (changes direction of the current) with frequency, corresponding to the mechanical resonance of LM 16. If *P_{b}* is the stabilized power of battery 12, η*P_{b}* will be the output power of converter 10 or input active power of LM 16 (for a loss-less commutator). In each moment, the instantaneous value of the input power of LM will be equal η*P_{d}* and the DC/DC converter 10 performs the function of constant power pumping of the battery 12 to the LM 16.

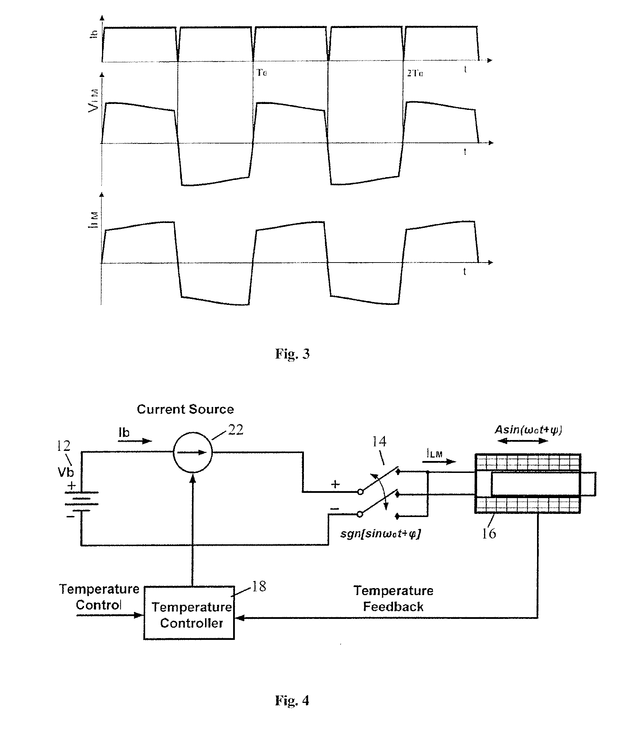

Battery current, LM input current and voltage for describing means of operation are shown in Fig. 3. Battery current *I_{b}* will be constant, without current peaks, without low and high frequency harmonics and minimum RMS as square-wave form. Product *Iₗₘ,* · *Vₗₘ* = η · *P_{b}* - instantaneous value of LM input power is constant value. Control of temperature is provided by changing of the CP or CC level of battery.

If the LM voltage shape is close to the square-wave form, control can be provided by pumping the DC/DC converter output CC control. In this case, pumping the DC/DC converter can be represented by a current source 22, as shown in Fig. 4.

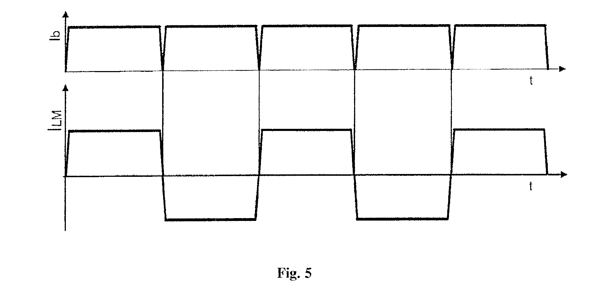

Fig. 5 shows battery current *I_{b}* and *Iₗₘ* current for realization on base of current source.

It is appreciated from the above that the system of the invention is free from the disadvantages of prior art drivers. Short time dropping of current in the each of periods may be necessary for reliable and interference-less operation of commutator. This short time can be about few microseconds and should be no less then commutator switching time (few microseconds). Due to short time, this dropping can be removed by a small capacitor.

It is clear that the current drawn from the battery is DC current, ideal for reducing the weight of the battery due to the absence of peaks in the battery current. The lower RMS from the battery will also result in substantially less heating, so the environmental range of the battery can be increased. Finally, the amplitude of the lower frequency harmonics is much lower so that the size of the low frequency noise filters can be greatly reduced or removed

It is also appreciated that various features of the invention which are, for clarity, described in the contexts of separate embodiments, may also be provided in combination in a single embodiment. Conversely, various features of the invention which are, for brevity, described in the context of a single embodiment, may also be provided separately or in any suitable subcombination.

## Claims

1. A pumping driver for a linear motor comprising:
a DC/DC converter connected to a battery, an output of said DC/DC converter being connected to a commutator, wherein said commutator is connected to a linear motor; and
a temperature controller, wherein temperature feedback from said linear motor is fed to said temperature controller, and said temperature controller processes the feedback and a temperature control signal to output a control signal to a battery current controller that outputs to said DC/DC converter, such that said DC/DC converter that performs at least one of constant power pumping and constant input current pumping of said battery to said linear motor.

2. The pumping driver ac cording to claim 1, wherein said pumping driver changes power of said linear motor by regulation of at least one of power level and input current level to said linear motor.

3. The pumping driver according to claim 1, wherein said commutator inverts output current of said DC/DC converter with a frequency corresponding to a mechanical resonance of said linear motor.

4. The pumping driver according to claim 1, wherein said DC/DC converter comprises a current source.
